Europäisches Patentamt

(19) European Patent Office

Office européen des brevets

(11) Veröffentlichungsnummer: **0 059 969**

**A1**

(12) **EUROPÄISCHE PATENTANMELDUNG**

(21) Anmeldenummer: 82101834.8

(22) Anmeldetag: 08.03.82

(51) Int. Cl.³: **H 02 P 8/00**

(30) Priorität: 11.03.81 DE 3109315

(43) Veröffentlichungstag der Anmeldung:
15.09.82 Patentblatt 82/37

(84) Benannte Vertragsstaaten:
CH DE FR GB IT LI NL SE

(71) Anmelder: SIEMENS AKTIENGESELLSCHAFT Berlin
und München
Postfach 22 02 61
D-8000 München 22(DE)

(72) Erfinder: Frystacki, Henryk, Dipl.-Ing.
Leo-Graetz-Strasse 4
D-8000 München 70(DE)

(54) Spannungsquelle mit Strombegrenzung für die Konstantstromansteuerung von Schrittmotoren.

(57) Die erfindungsgemäße Schaltungsanordnung zur Konstantstromansteuerung eines Schrittmotores besteht aus einer ersten Meßeinrichtung (ME1) zur Erfassung des zeitlichen Mittelwertes der Ansteuerspannung des Schrittmotores und einer zweiten Meßeinrichtung (ME2) zur Erfassung des Laststromes des Schrittmotores. Den Meßeinrichtungen ist eine die Schalteinrichtung (SE) ansteuernde und von einer Referenzspannungsquelle gespeiste Regeleinrichtung (SA, FU) zugeordnet, die in einem der Kommutierungsphase einer Einzelwicklung des Motors zugeordneten Betriebszustand die Ansteuerspannung für die Wicklung in Abhängigkeit vom Ausgangssignal der ersten Meßeinrichtung (ME1) regelt und in einem zweiten, der Betriebsphase einer Einzelwicklung des Schrittmotores zugeordneten Betriebszustand den Laststrom in der Wicklung in Abhängigkeit des Ausgangssignals der zweiten Meßeinrichtung (ME2) regelt.

FIG 3

EP 0 059 969 A1

0059969

SIEMENS AKTIENGESELLSCHAFT          Unser Zeichen
Berlin und München                  VPA 81 P 6720 E

Spannungsquelle mit Strombegrenzung für die Konstantstromansteuerung von Schrittmotoren

Die Erfindung betrifft eine Schaltungsanordnung zur Regelung einer Spannungsquelle mit Strombegrenzung für die
Konstantstromansteuerung von Schrittmotoren mit einer ungeregelten Gleichspannungsquelle und einer damit verbundenen Schalteinrichtung.

Es ist allgemein bekannt, Schrittmotoren für Positionierzwecke, z.B. zur Positionierung von Typenscheiben, in
Druckeinrichtungen zu verwenden. Werden Schrittmotoren
als Antriebseinrichtungen für Schreibwagen in derartigen
Druckeinrichtungen eingesetzt, so müssen sie so ausgestaltet sein, daß sie nach einer Beschleunigungsphase
eine konstante Rotationsgeschwindigkeit erreichen sollen,
bei der möglichst konstante Bedingungen hinsichtlich des
Drehmomentes und der die Systemschwingungen beeinflussenden Parameter herrschen.

Die zur Erzielung einer konstanten Rotationsgeschwindigkeit erforderliche exakte wechselseitige Ansteuerung der
einzelnen Wicklungen des Schrittmotores erfordert die
Verwendung von geregelten Stromquellen bzw. Konstantspannungsquellen, um die Einflüsse von Netz- und Lastregelschwankungen, aber auch von Spannungsrestwelligkeiten auf die Stromanstiegssteilheit in den Motorwicklungen
als Folge der in der Kommutierungsphase erforderlichen
Überregung der einzelnen Motorwicklungen zu mindern.

Um diese Einflüsse auf ein Minimum zu bringen, ist es
allgemein üblich, Schrittmotoren über geregelte Umrichter zu betreiben, die eine konstante Ausgangsspannung
liefern.

MM 1 Fra / 10.3.1981

Derartige Umrichter, die allgemein in Stromversorgungen Verwendung finden, müssen speziell wegen der Schrittmotorenansteuerung besonders aufwendig aufgebaut sein, wobei zur Anpassung an die einzelnen Schrittmotortypen zusätzliche Maßnahmen erforderlich sind.

Aufgabe der Erfindung ist es, eine Schaltungsanordnung zur Regelung einer Spannungsquelle mit Strombegrenzung für die konstante Stromsteuerung von Schrittmotoren bereitzustellen, die direkt dem Schrittmotor zugeordnet ist, und die eine exakte Ansteuerung des Schrittmotores ermöglicht.

Diese Aufgabe wird bei einer Schaltungsanordnung der eingangs genannten Art dadurch gelöst, daß eine erste Meßeinrichtung zur Erfassung des zeitlichen Mittelwertes der Ausgangsspannung und eine zweite Meßeinrichtung zur Erfassung des Ausgangsstromes vorgesehen sind, und daß den Meßeinrichtungen eine die Schalteinrichtung ansteuernde, von einer Referenzspannungsquelle gespeiste Schaltregeleinrichtung zugeordnet ist, die in einem einer Kommutierungsphase (Übererregungsphase) einer Einzelwicklung des Motors zugeordneten Betriebszustand die Ansteuerspannung für die Wicklung in Abhängigkeit vom Ausgangssignal der ersten Meßeinrichtung regelt und in einem zweiten der Betriebsphase (Stromregelphase) einer Einzelwicklung des Schrittmotores zugeordneten Betriebszustand den Laststrom in der Einzelwicklung in Abhängigkeit des Ausgangssignals der zweiten Meßeinrichtung regelt.

Durch die Erfindung wird in vorteilhafter Weise der Einfluß von Spannungsschwankungen auf den Schrittmotor ausgeschlossen und damit eine exakte Ansteuerung ermöglicht. So wird in der Phase der Übererregung der Motorwicklung (der sogenannten Kommutierungsphase) selbsttätig die Ausregelung der Spannungsschwankung bewerkstelligt. Abhängig von der Ausgestaltung der ansteuernden Schaltungsanordnung und dem darin vorgenommenen Aufwand zur Spannungsglättung wird ein dem Mittelwert der Ansteuerspannung entsprechendes Signal erzeugt, das die Schaltfrequenz bzw. die Impulse des Schaltreglers des Schrittmotores während dieser Kommutierungs- oder Übererregungsphase festlegt. In dem auf diese Kommutierungsphase folgenden Betriebsphasenbereich erfolgt eine Stromregelung, wobei die Zuleitung für die Spannungsregelung unterbrochen wird. Damit erübrigt sich eine besondere Spannungsvorregelung für den Schrittmotor.

Vorteilhafte Ausführungsformen der Erfindung sind in den Unteransprüchen gekennzeichnet.

Die Erfindung wird im folgenden beispielsweise anhand der Figuren beschrieben.
Es zeigen
Fig. 1 eine schematische Darstellung des Stromverlaufes (IL) an einer Erregerwicklung in Abhängigkeit von der Zeit (t),
Fig. 2 ein Blockschaltbild der erfindungsgemäßen Schaltungsanordnung und
Fig. 3 ein Schaltbild eines Ausführungsbeispieles der Schaltungsanordnung.

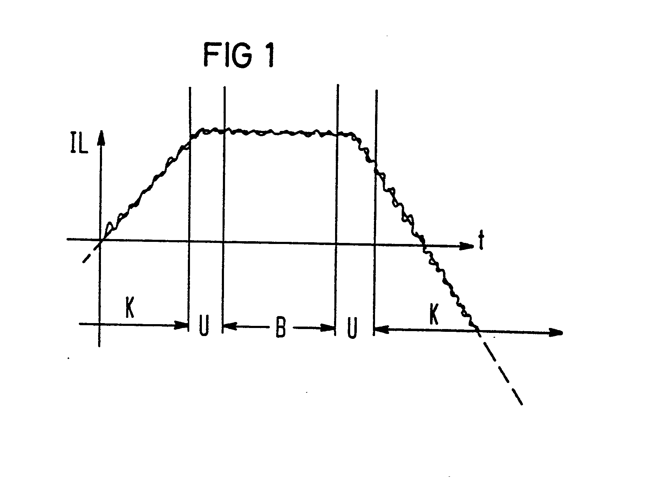

Die Ansteuerung von Schrittmotoren ist allgemeiner Stand der Technik. Zur Abgrenzung der Begriffe wird im folgenden anhand der Fig. 1 der Stromverlauf bei der Ansteuerung einer Einzelwicklung näher erläutert.

Bei der Ansteuerung einer Einzelwicklung unterscheidet man zwischen den eigentlichen Kommutierungsphasen K (auch Übererregungsphasen genannt), bei denen die Wicklung durch Anlegen einer hohen Spannung erregt und damit das Magnetfeld aufgebaut bzw. abgebaut wird. Der Laststrom IL steigt dabei in Abhängigkeit von der erregenden Spannung bis zu einem bestimmten Höchstwert an, der den Beginn der eigentlichen Betriebsphase B definiert. An diese Betriebsphase B, an der der Rotor seine Position verändert, schließt sich durch Ansteuerung einer neuen Erregerwicklung eine weitere steiler verlaufende Kommutierungsphase K, in der der Strom in der Erregerwicklung abgebaut wird, an. Zwischen der Kommutierungsphase K und der Betriebsphase B definiert man eine Übergangsphase U, die zur Vergleichsmäßigung der Bewegung einen möglichst weichen Verlauf haben soll.

Die erfindungsgemäße Schaltungsanordnung regelt in der Kommutierungsphase K den Stromanstieg in Abhängigkeit von einem dem zeitlichen Mittelwert der erregenden Spannung entsprechenden Signal. Auf dem der Kommutierungsphase zugeordneten Spannungsregelbereich folgt ein der Betriebsphase zugeordneter Stromregelbereich. Die Spannungsregelung wird dabei abgeschaltet und es erfolgt eine alleinige Stromregelung auf Konstantstrom. An den Stromregelbereich der Betriebsphase B schließt sich wiederum ein Spannungsregelbereich (Kommutierungsphase K) an.

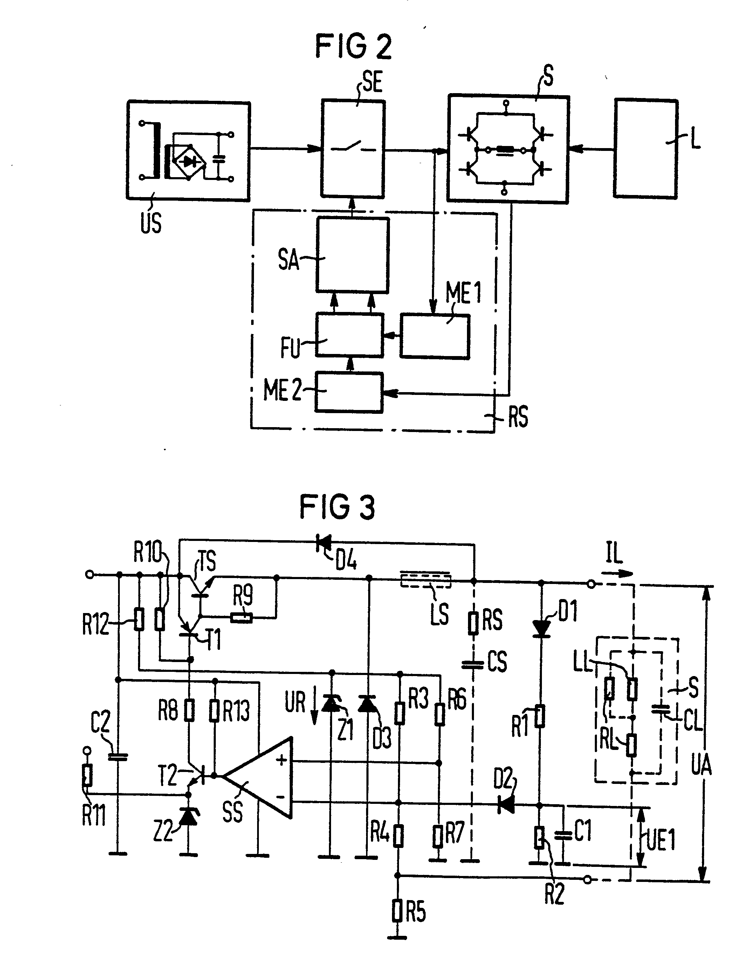

Die Funktion der erfindungsgemäßen Schaltungsanordnung wird im weiteren anhand des Blockschaltbilds der Fig. 2 erläutert.

Ein Schrittmotor, der hier mit einer Einzelwicklung mit zugehörigen Schalttransistoren als Strombrücke S dargestellt ist, wird in bekannter Weise über eine Ansteuerlogik L in Abhängigkeit von einem Ansteuerprogramm über die schematisch dargestellten Schalttransistoren angesteuert. Die Spannungsversorgung der einzelnen Wicklungen, in diesem Fall der Strombrücke, erfolgt über eine ungeregelte Spannungsquelle US, die wie dargestellt aus einem Transformator mit nachgeschaltetem Gleichrichter und Glättungskondensator besteht. Die Ansteuerung der Erregerwicklung des Schrittmotors S erfolgt über eine Schalteinrichtung SE, die z.B. als Schalttransistor ausgebildet sein kann. Damit wird der Strom- und der Spannungsverlauf in der Wicklung durch Öffnen und Schließen der Schalteinrichtung SE gesteuert. Die Regelung der Schaltfrequenz der Schalteinrichtung SE erfolgt über die erfindungsgemäße Regelschaltung RS, die im wesentlichen aus einem ersten Meßglied ME1 zur Erfassung des zeitlichen Mittelwertes der am Eingang der Erregerwicklung des Schrittmotors anliegenden Spannung, eines weiteren Meßgliedes ME2 zur Erfassung des Laststromes in der Erregerwicklung des Schrittmotores S, einer Funktionsumschaltungseinrichtung FU zwischen Strom- und Spannungsregelung und einer eigentlichen Schaltregleransteuerung SA besteht. In der Kommutierungsphase K der Erregerwicklung des Schrittmotores S erfaßt das erste Meßglied ME1, das als Integrator ausgebildet ist, den zeitlichen Mittelwert der Erregerspannung. Die mit Referenzspannungsquelle versehene Schaltregelanordnung SA regelt über das vom Meßglied ME1 ausgehende, dem Mittelwert der Spannung an der Erregerwicklung entsprechende Signal die elektronische Schalteinrichtung SE derart, daß sich ein konstanter von Spannungsschwankungen der ungeregelten Spannungsquelle US unabhängiger Stromverlauf in den der Erregerwicklung der Strombrücke S des Schrittmotores ergibt.

Nach Erreichen der Betriebsphase B folgt eine Funktionsumschaltung über die Funktionsumschaltungsanordnung FU derart, daß die vom Meßglied ME1 ausgehende Signalzuleitung für die Spannungsregelung zur Schaltregleransteuerung SA unterbrochen wird, wobei die Regelung der Schalteinrichtung SE jetzt in Abhängigkeit vom Ausgangssignal der Meßeinrichtung ME2 erfolgt. Dieses Meßglied erfaßt den Laststrom in der Erregerwicklung des Schrittmotors S und bildet ein dem Laststrom entsprechendes Signal, in dessen Abhängigkeit die Ansteuerung der Schalteinrichtung SE erfolgt. Nach Beendigung der Betriebsphase und bei erneuter Kommutierung der Erregerwicklung des Schrittmotores S wird über die Funktionsumschaltanordnung FU wieder auf das Meßglied ME1 umgeschaltet.

Die Fig. 3 zeigt ein Blockschaltbild der erfindungsgemäßen Schaltungsanordnung. Das mit dem Block S bezeichnete Netzwerk (Strombrücke) aus Induktivität, Kapazität und ohmschen Widerstand stellt dabei das Ersatzschaltbild für eine Wicklung des Schrittmotores S dar. Dieser Schrittmotor S wird von der erfindungsgemäßen Schaltungsanordnung angesteuert, die dabei zwei Aufgaben erfüllt, und zwar einerseits liefert sie die zur Übererregung der Motorwicklung erforderliche hohe Spannung UA, andererseits dient sie zur Einstellung des erwünschten Laststromes IL. Die Schaltungsanordnung arbeitet dabei hinsichtlich der Energieübertragung auf den Schrittmotor S nach dem Eintakt-Sperrwandler-Prinzip. So wird bei geöffnetem Schalttransistor TS die Speicherinduktivität LS und vor allem die Lastinduktivität LL (Wicklung) mit Energie geladen. Der Energieabbau bei geschlossenem Schalter TS erfolgt mittels Stromflußreduktion, unter Mitwirkung des Siebzweiges aus dem Widerstand RS und der Kapazität CS bzw. der kleinen Lastkapazität CL und dem ohmschen Widerstand RL der Erregerwicklung.

Prinzipiell ist wegen der Induktivität LL das Siebnetzwerk aus der Induktivität LS, dem Widerstand RS und der Kapazität CS nicht notwendig. Dieses Siebnetzwerk empfiehlt sich jedoch bei der Ansteuerung eines Schrittmotores zur Entlastung der Strombrücke des Schrittmotors S. Es dient zur Entkopplung der Motoransteuerung und der Spannungsversorgung.

Wie eingangs beschrieben, unterscheidet man bei der Ansteuerung der Erregerwicklung zwischen dem eigentlichen Kommutierungsbereich K und dem Betriebsbereich B. Die Schaltungsanordnung dient also einerseits dazu, während der Kommutierungsphase den zeitlichen Mittelwert der Lastinduktivitätsspannung in der Erregerwicklung hinsichtlich einer konstanten Übererregungsphase zu steuern, andererseits dazu, in der Betriebsphase den Strom in der Erregerwicklung zu steuern. Die konstante Übererregungsphase (Kommutierungsphase) ist notwendig, um den Schrittmotor mit möglichst konstanten Bedingungen zu betreiben. Die das Drehmoment und die Systemschwingungen beeinflussenden Parameter bleiben dadurch unverändert und es kann eine konstante Rotationsgeschwindigkeit reproduzierbar eingestellt werden.

Außerdem kann in Hochlaufprogrammen das Grenzgebiet des Beschleunigungsbereiches besser genutzt werden.

Um den zeitlichen Mittelwert der Lastinduktivitätsspannung zu erfassen, besteht das Meßglied ME1 (Fig. 2) aus einer Diode D1, Widerständen R1 und R2 und einem Kondensator C1. Die Diode D1 ist nur bei ungünstiger Zeitkonstante des vorher beschriebenen Siebnetzwerks notwendig und dient zur Entkopplung. Wesentlich ist das RC-Glied aus dem Widerstand R1 und dem Kondensator C1 mit deren abgreifbarer Spannung UE1, denn es wirkt als Integrator.

Das RC-Glied aus den Widerständen R1, R2 und dem Kondensator C1 ist über eine Schaltdiode D2 mit dem invertierenden Eingang eines Schwellwertschalters SS verbunden. Mit demselben Eingang verbunden ist ein weiteres Meßglied ME2 aus einem Spannungsteiler aus den Widerständen R3, R4 und R5. Der niederohmige, im Lastkreis angeordnete Widerstand R5 ermittelt eine dem Wicklungsstrom äquivalente Meßspannung, die dem Schwellwertschalter SS für die Einstellung des notwendigen Tastverhältnisses des Schalttransistors TS während der Betriebsphase B (Stromregelphase Fig. 1) zugeführt wird. Der Schwellwertschalter SS liegt mit seinen nichtinvertierenden Eingang über einen weiteren Spannungsteiler aus den Widerständen R6 und R7 an einer Referenzspannungsquelle UR an. Die Referenzspannung UR wird in diesem Falle von einer Zenerdiode Z1 erzeugt.

Die Referenzspannung UR legt die Stromschaltschwelle und damit das Schaltverhalten des Schwellwertschalters SS fest. Durch die Kopplung des Referenzspannungsteilers aus den Widerständen R6 und R7 mit dem Meßspannungszweig aus den Widerständen R3, R4 und R5 kann bei entsprechender Dimensionierung die Schaltschwelle sehr exakt fixiert werden. Der Einfluß von Spannungsschwankungen und Schaltstörspitzen auf der Referenzspannungsleitung wird dadurch praktisch vernachlässigbar. Die Umschaltung zwischen dem Spannungsregelbereich und dem Stromregelbereich, d.h. also die Umschaltung von der Kommutierung K zur Betriebsphase B erfolgt abhängig von der Dimensionierung der einzelnen Meßglieder ME1 und ME2 durch die Diode D2. Diese Schaltdiode D2 verhindert im Stromregelbereich, d.h. also nach Erreichen einer bestimmten Ansteuerspannung, eine weitere Beeinflussung des Schwellwertschalters SS durch das RC-Glied (Meßglied ME1). Für die drei Regelbereiche, nämlich den Spannungsregelbereich, den Übergangsbereich und den Stromregelbereich gelten im Betriebsbereich die folgenden Bedingungen:

Spannungsregelbereich:

$$UR \cdot \frac{R4 + R5}{R3 + R4 + R5} + JL \cdot R5 < UE1 \text{ min}$$

Übergangsbereich:

$$UE1 \text{ min} \quad UR \frac{R4 + R5}{R3 + R4 + R5} + JL \cdot R5 < UE1 \text{ max}$$

Stromregelbereich:

$$UR \cdot \frac{R4 + R5}{R3 + R4 + R5} + JL \cdot R5 > UE1 \, max$$

Zur Ansteuerung des Schalttransistors TS über den Schwellwertschalter SS ist dem Schalttransistor TS eine Treiberstufe aus einem weiteren Schalttransistor T1 vorgeschaltet, der wiederum über einen Schalttransistor T2 mit zugehörigem Widerstand R8 angesteuert wird. Der Treibertransistor T1 hat die Aufgabe, zur Erzielung eines optimalen Schaltverhaltens den Leistungstransistor TS im quasi Sättigungsbereich zu betreiben und zusätzlich noch den Schalttransistor TS leistungsmäßig zu entlasten. Zu diesem Zweck ist der Treibertransistor T1 über einen niederohmigen Stabilisierungswiderstand R9 mit dem Ausgang des Schalttransistors TS (Emitter) verknüpft. Die in dem Stabilisierungswiderstand R9 umgesetzte Leistung bleibt aufgrund der niedrigen Basis-Emitter-Spannung des Leistungstransistors TS gering. Der Stabilisierungswiderstand R9 vermindert außerdem die Speicherzeit des Schalttransistors TS. Für die Basisansteuerung des Schalttransistors TS über den Treibertransistor T1 wird die Eigenschaft genutzt, daß sich die Basis-Emitter-Spannung des Leistungstransistors TS nur geringfügig mit dem Basisstrom ändert und sich der Transistor TS nach der Sättigung von dem Treibertransistor T1 im Bereich der Quasisättigung hält. Zunehmende Übersättigung des Treibers T1 wirkt sich im wesentlichen nur auf seine eigene Speicherzeit aus, da seine Sättigungsspannung relativ konstant bleibt.

Durch eine derartige Basisansteuerung des Schalttransistors und seinem Betrieb im quasi Sättigungsbereich läßt sich ein leistungsarmer und preisgünstiger Leistungstransistortyp verwenden. Der Treibertransistor T1 wird wiederum über einen Schalttransistor T2 angesteuert, wobei dem Treibertransistor T1 ein Stabilisierungswiderstand R10 zugeordnet ist. Dieser Stabilisierungswiderstand R10 verbessert das
Einschaltverhalten des Treibertransistors T1, da der Treibertransistor T1 erst eingeschaltet wird, wenn durch den
Schalttransistor T2 bereits ein entsprechender Strom
fließt und damit ausgeschlossen ist, daß es sich nur um
eine Störspannungsspitze im Schwellwertbereich handelt.

Da der Schalttransistor TS nach Erreichen des quasi gesättigten Bereiches mit seiner eigenen Stromverstärkung
arbeitet, werden die Basisströme der Treibertransistoren
T1 und des Schalttransistors T2 so groß gewählt, daß sie
auch im betriebsmäßig ungünstigsten Fall eine Sättigung
des Schalttransistors TS verhindern. Um zu gewährleisten,
daß die Treiberstufe erst in einem Bereich schaltet, in
dem der Schwellwertschalter SS bereits eine steile Einschaltflanke an seinem Ausgang bringt, wird in die Basis-Emitter-Steuerstrecke des Schalttransistors T2 eine eigenversorgte Zenerdiode Z2 integriert. Die Eigenversorgung
der Zenerdiode Z2 über einen Widerstand R11 bewirkt ein
äußerst schnelles Abschalten des Schalttransistors T2 aufgrund der negativen Basis-Emitter-Spannung beim Abschaltvorgang.

Parallel zum Ansteuernetzwerk des Schalttransistors TS
ist eine Freilaufdiode D3 angeordnet. Sie schließt den
Stromflußkreis bei geöffnetem Schalttransistor TS und
verhindert eine Zerstörung des Schalttransistors TS von
seiten der Last.

Eine parallel zur Emitter-Kollektorstrecke des Schalttransistors TS angeordnete Rückspeisediode D4 dient zur Rückspeisung der Energie aus der Strombrücke des Schrittmotors
in den Glättungskondensator C2 während der Kommutierung.

Die weiteren bisher nicht bezeichneten Bauelemente sind der
Spannungsversorgung dienenden Widerstände R12 und R13.

7 Patentansprüche

3 Figuren

Bezugszeichenliste

|  |  |
|---|---|
| t | Zeit |
| JL | Laststrom |
| B | Betriebsphase |
| K | Kommutierungsphase |
| U | Übergangsphase |
| S | Schrittmotor (Strombrücke) |
| L | Ansteuerlogik |
| US | ungeregelte Spannungsquelle |
| SE | Schalteinrichtung |
| RS | Regelschaltung |
| ME1 | erste Meßeinrichtung (Meßglied) |
| ME2 | zweite Meßeinrichtung (Meßglied) |
| FU | Funktionsumschalteeinrichtung |
| SA | Schaltregleransteuerung |
| UA | Ansteuerspannung an der Wicklung |
| TS | Schalttransistor |
| LS | Speicherinduktivität |
| LL | Lastinduktivität |
| RS | Widerstand im Siebzweig |
| CS | Kapazität |
| CL | Lastkapazität |
| RL | ohmscher Widerstand in der Erregerwicklung |
| D1 | Diode |
| R1 | Widerstand |
| R2 | Widerstand |
| C1 | Kondensator |
| D2 | Schaltdiode |
| SS | Schwellwertschalter |
| R3, R4, R5 | Widerstände (Meßglied) |
| R6, R7 | Widerstände |
| UR | Referenzspannungsquelle |
| Z1 | Zenerdiode |
| UE1 | Spannung am Meßglied |

| T1 | Schalttransistor |
|----|------------------|
| T2 | Schalttransistor |
| R8 | Widerstand |
| R9 | niederohmiger Stabilisierungswiderstand |
| R10 | Stabilisierungswiderstand |
| Z2 | Zenerdiode |
| R11 | Widerstand |
| D3 | Freilaufdiode |
| D4 | Rückspeisediode |
| C2 | Glättungskondensator |
| R12, R13 | Widerstände |

Patentansprüche

1. Schaltungsanordnung zur Regelung einer Spannungsquelle mit Strombegrenzung für die Konstantstromansteuerung von Schrittmotoren mit einer ungeregelten Gleichspannungsquelle und einer damit verbundenen Schalteinrichtung, d a d u r c h   g e k e n n z e i c h n e t ,   daß eine erste Meßeinrichtung (ME1) zur Erfassung des zeitlichen Mittelwertes der Ansteuerspannung des Schrittmotores und eine zweite Meßeinrichtung (ME2) zur Erfassung des Laststromes des Schrittmotores vorgesehen sind, und daß den Meßeinrichtungen eine die Schalteinrichtung (SE) ansteuernde, von einer Referenzspannungsquelle gespeiste Schaltregeleinrichtung (SA, FU) zugeordnet ist, die in einem der Kommutierungsphase (Übererregungsphase) einer Einzelwicklung des Motores zugeordneten Betriebszustand die Ansteuerspannung für die Wicklung in Abhängigkeit vom Ausgangssignal der ersten Meßeinrichtung (ME1) regelt und in einem zweiten der Betriebsphase (Stromregelphase) einer Einzelwicklung des Schrittmotores zugeordneten Betriebszustand den Laststrom in der Wicklung in Abhängigkeit des Ausgangssignals der zweiten Meßeinrichtung (ME2) regelt.

2. Schaltungsanordnung nach Anspruch 1, d a d u r c h g e k e n n z e i c h n e t ,   daß die Schaltregelein- richtung aus einem Schwellwertschalter (SM) besteht, dessen Eingänge über Anpassungswiderstände (R13, R3, R6) an der Referenzspannungsquelle (UR) liegen und bei dem ein Eingang einerseits über eine Schaltdiode (D2) mit der als RC-Glied ausgebildeten ersten Meßeinrichtung (ME1), andererseits mit der als Spannungsteiler ausgebildeten zweiten Meßeinrichtung (ME2) verknüpft ist.

3. Schaltungsanordnung nach einem der Ansprüche 1 oder 2, d a d u r c h   g e k e n n z e i c h n e t ,   daß die

Schalteinrichtung aus einem Schalttransistor (TS) mit vorgeschalteter Treiberstufe (T1), aus einem weiteren Schalttransistor (T1) mit einer niederohmigen, mit dem Ausgang des Schalttransistors (TS) verknüpften Stabilisierungswiderstand (R9) besteht.

4. Schaltungsanordnung nach einem der Ansprüche 1 bis 3, d a d u r c h   g e k e n n z e i c h n e t , daß der Ausgang des als Operationsverstärker ausgebildeten Schwellwertschalters (SS) mit dem Steuerungseingang eines weiteren, die Schalteinrichtung ansteuernden Schalttransistors (T2) in Verbindung steht, und daß in der Basis-Emitter-Steuerstrecke des Schalttransistors (T2) eine spannungsmäßig eigenversorgte Zenerdiode (Z2) angeordnet ist.

5. Schaltungsanordnung nach einem der Ansprüche 1 bis 3, d a d u r c h   g e k e n n z e i c h n e t , daß als Referenzspannungsquelle eine Zenerdiode (Z1) angeordnet ist.

6. Schaltungsanordnung nach einem der Ansprüche 1 bis 5, d a d u r c h   g e k e n n z e i c h n e t , daß zwischen der Schalteinrichtung (TS) und dem Ausgang der Schaltungsanordnung eine Siebkette aus einer seriengeschalteten Speicherinduktivität (LS) mit einer parallel zum Ausgang der Schaltungsanordnung angeordneten Widerstand (RS) und Kapazität (CS) angeordnet ist.

7. Schaltungsanordnung nach einem der Ansprüche 1 bis 6, d a d u r c h   g e k e n n z e i c h n e t , daß parallel zur Emitter-Kollektor-Strecke des Schalttransistors (TS) eine Rückspeisediode (D4) angeordnet ist.

FIG 1

## FIG 2

## FIG 3

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 310 937  (VEB ELEKTROMAT) <br> * Seite 7, Zeile 3 - Seite 8, Zeile 12; Figur * | 1 | H 02 P    8/00 |
| | --- | | |
| A | DE-A-2 359 029  (WICKMAN MACHINE TOOL SALES) <br> * Seite 2, Zeile 8 - Seite 3, Zeile 8; Seite 5, Zeile 7 - Seite 6, Zeile 14; Seite 9, Zeile 1 - Seite 10, Zeile 3; Figuren 1-3 * | 1 | |
| | --- | | |
| A | DE-A-2 255 553  (JENOPTIK JENA) <br> * Seite 3, Zeile 20 - Seite 4, Zeile 25; Figur 1 * | 1 | |
| | --- | | |
| A | US-A-3 424 961  (THE SUPERIOR ELECTRIC) <br> * Spalte 2, Zeile 60 - Spalte 3, Zeile 21; Figur 2 * | 1 | |

|  |  |  | RECHERCHIERTE SACHGEBIETE (Int. Cl. ³) |
|---|---|---|---|
| | --- | | H 02 P    8/00 |
| A | FR-A-2 239 043  (FUJITSU) | 1 | |
| | --- | | |
| A | FR-A-2 435 153  (THE VALERON) | 1 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 14-06-1982 | WEIHS J.A. |